## Europäisches Patentamt
## European Patent Office
## Office européen des brevets

(11) Veröffentlichungsnummer: **0 171 712 B1**

(12) **EUROPÄISCHE PATENTSCHRIFT**

(45) Veröffentlichungstag der Patentschrift: **18.03.92**

(21) Anmeldenummer: **85109679.2**

(22) Anmeldetag: **01.08.85**

(51) Int. Cl.⁵: **G06K 13/04**, G06F 7/06

(54) **Sortiermodul für Belegsortierung.**

(30) Priorität: **14.08.84 DE 3429856**

(43) Veröffentlichungstag der Anmeldung:
**19.02.86 Patentblatt 86/08**

(45) Bekanntmachung des Hinweises auf die
Patenterteilung:
**18.03.92 Patentblatt 92/12**

(84) Benannte Vertragsstaaten:
**AT CH DE FR GB IT LI NL SE**

(56) Entgegenhaltungen:
**DE-B- 1 277 597**
**DE-C- 519 374**
**US-A- 3 874 653**
**US-A- 4 251 000**

(73) Patentinhaber: **Mannesmann Kienzle GmbH**
**Postfach 1640**
**W-7730 Villingen-Schwenningen(DE)**

(72) Erfinder: **Gille, Paul**
**Salinenstrasse 4**
**W-7737 Bad Dürrheim(DE)**
Erfinder: **Hauger, Josef**
**Pforzheimer Strasse 31**
**W-7730 Villingen-Schwenningen(DE)**
Erfinder: **Mädge, Werner**
**Weichselstrasse 34**
**W-7730 Villingen-Schwenningen(DE)**

(74) Vertreter: **Leiser, Gottfried, Dipl.-Ing. et al**
**Patentanwälte Prinz, Leiser, Bunke & Partner**
**Manzingerweg 7**
**W-8000 München 60(DE)**

## Beschreibung

Die Erfindung betrifft ein Sortiermodul für die Belegsortierung, bei dem die hochkantstehend transportierten Belege von einer Einlauföffnung zwischen Sortierkanäle bildenden flexiblen Führungsschienen zu den einzelnen Ablagefächern führbar sind, wobei jeweils zwei flexible Führungsschienen einen trichterförmigen Einlauf bilden und ein Einlauftrichter durch eine Steuertung für jeweils einen Sortierkanal auswählbar ist.

Aus der DE-AS 12 77 597 ist ein gattungsgemäßer Sortiermodul bekannt, bei dem flexible Führungsschienen einer Einlauföffnung gegenüberstehen. Die flexiblen Führungsschienen sind so einstellbar bzw. schwenkbar angeordnet, daß sie Einlauföffnungen bilden können, durch die die Belege in die einzelnen Ablagefächer, in die die Führungsschienen münden, einlaufen. Die Steuerung der Einlaufenden der flexiblen Führungsschienen geschieht dahingehend, daß am Einlaufende jeder Schiene eine elektromagnetische Wicklung aufgedruckt ist und daß dem gesamten Paket der Einlaufenden der Führungsschienen Permanentmagnete gegenüberstehen, die - je nach der Richtung des Stromdurchflusses in den aufgedruckten Magnetwicklungen - die Enden der Führungsschienen entweder anziehen oder abstoßen. Die Steuerung dieser Führungsschienen ist daher relativ kompliziert, weil jede Führungsschiene mit elektrischen Anschlüssen versehen sein muß, um der aufgedruckten Magnetwicklung die elektrische Energie für die Steuerung zuzuführen und weil auch die Stromrichtung in diesen Wicklungen umkehrbar sein muß.

Aus der DE-A1-519 374 ist eine Sortiermaschine älterer Bauart bekannt, bei der flachliegende Lochkarten sortiert werden. Um eingklemmte oder verbogene Karten zu vermeiden, wird anstelle einer Führung zwischen Gleitschienen und einer Führung auf Bändern (jeweils in flacher Lage) eine Führung zwischen Drähten vorgesehen, die einen sehr geringen Reibungswiderstand aufweisen. Diese Drähte sind für jedes Sortierfach einzeln eingelegt und führen von einer Befestigungsstelle, die dort als Kartentrichter bezeichnet ist, zu den einzelnen Sortierfächern. Der "Kartentrichter" ist beweglich und wird durch ein Schaltwerk gesteuert. Zwei benachbarte Drähte selbst können jedoch nicht Trichterfunktionen übernehmen. In einem System hochkantstehend transportierter Belege ist daher eine solche Ausgestaltung nicht brauchbar.

Mit der eingangs bezeichneten Gattung nicht übereinstimmende Lösungen (DE-PS 12 23 596; DE-AS 11 41 116) beschreiben Sortiervorrichtungen, bei denen das Ablagefach bzw. seine Zuführung gesteuert vor die Einlauföffnung der Belege geführt wird (insbesondere die DE-PS 12 23 596).

Die aus der DE-AS 12 77 597 vorbekannte Lösung bedarf einer relativ großen Einlauföffnung, wodurch sich die Bewegungsrichtung der ankommenden Belege am Eingang erheblich seitlich verlagert.

Die weiter bekannte Lösung (DE-PS 12 23 596) ist grundsätzlich zur Einwirkung auf die Belege (Aufzeichnungsstreifen) an Absätze gebunden, die sich an benachbarten Belege versetzt befinden, so daß das Auswählen eines Beleges durch gegenläufiges Auseinanderspreizen der benachbarten Belege erfolgt und der Rücktransport in die offengehaltene Lücke. . .

Die dann noch genannte Lösung (DE-AS 11 41 116) bedient sich mehrerer Rollenpaare, deren Rollenspalte auf die radialen Schlitze einer drehbaren Trommel ausgerichtet werden müssen. Es muß jedoch in der Praxis stets mit gewissen Toleranzabweichungen gerechnet werden, so daß ein EinFühren von Belegen bei hohen Transportgeschwindigkeiten problematisch sein kann.

Demgegenüber liegt der Erfindung die Aufgabe zugrunde, einen aus flexiblen Führungsschienen gebildeten Sortiermodul weniger aufwendig zu gestalten und die Einstellung der trichterförmigen Einläufe zur Einlauföffnung der hochkantstehend transportierten Belege zu verbessern.

Die gestellte Aufgabe wird erfindungsgemäß dadurch gelöst, daß die flexiblen Führungsschienen auf einem gemeinsamen Tragteil angeordnet sind und an ihren Einlaufenden jeweils trichterförmige Einlaufschlitze bilden, die einer schmaleren, ortsfesten Einlauföffnung gegenüberstehen und daß das Tragteil durch eine Steuerung und einen Schrittmotor derart einstellbar ist, daß der angesteuerte trichterförmige Einlaufschlitz der Einlauföffnung gegenübersteht, daß das Tragteil an seinem einlaufseitigen Ende kammartige Vorsprünge aufweist, die den einzelnen Führungsschienen zugeordnet sind, daß über Y-förmig gebogene Führungsstücke eine Verbindung zwischen den Führungsschienen und den Vorsprüngen gebildet ist und daß die Außenflächen der V-förmigen Führungsstücke zusammen mit den benachbarten V-förmigen Führungsstücken der anderen Führungsschienen jeweils den trichterförmigen Einlaufschlitz bilden.

Diese Lösung ist einfach und daher betriebssicher. Außerdem ergibt sich eine äußerst einfache Steuerung durch die Anzahl der jeweils durch den Schrittmotor vorzunehmenden Bewegungen. Ferner können Toleranzen der Herstellung leicht aufgefangen werden.

Vorteilhaft ist weiter, daß die Einlauföffnung von zwei parallelen Führungsstücken begrenzt wird, die zur Kontrolle des Beleglaufes einen elektrischen Belegfühler tragen.

Eine weitere Verbesserung besteht darin, daß das Tragteil an seinem dem einlaufseitigen Ende abgewandten Ende mit einem Zahnsegment versehen ist, das mit einem von dem Schrittmotor angetriebenen Zahnrad in Eingriff steht.

Es ist ferner vorgesehen, daß mit da Tragteil als Stellungsgeber eine Schlitzscheibe verbunden ist, die mit entsprechenden Sensoren zusamenarbeitet, die über die Steuerung die Einstellung des Tragteiles und der Führungsschienen in die anzuwählende Position bewirken.

Die flexiblen Führungsschienen liegen nach weiteren Merkmalen lose zwischen äußeren, die Führungsbahn begrenzenden Führungswänden, die gleichzeitig jeweils Auslauföffnungen für die einzelnen Ablagefächer bilden.

Eine andere Weiterbildung der Erfindung besteht darin, daß die flexiblen Führungsschienen und die Führungswände mit Ausnehmungen für den Durchtritt von Belegantriebs- und Belegandrückrollen versehen sind.

Eine mittlere Führungsschiene führt die Belege zu einer Austrittsöffnung, wobei an dieser Austrittsöffnung ein weiteres Sortiermodul anschließbar ist, derart, daß die Austrittsöffnung ausgerichtet ist mit der Einlauföffnung für das nächste Sortiermodul.

Die Ablagefächer sind mit einem eigenen Belegantrieb derart ausgestattet, daß sie lediglich jeweils über eine Steckverbindung an das Sortiermodul angeschlossen sind.

Ein Ausführungsbeispiel der Erfindung ist in der Zeichnung dargestellt und wird im folgenden näher beschrieben.

Es zeigen:

Fig. 1  eine Draufsicht auf das gesamte Sortiermodul

Fig. 1a  eine Einzelheit der Einlauföffnung in vergrößertem Maßstab,

Fig. 2  einen senkrechten Schnitt in Längsrichtung durch das Sortiermodul und

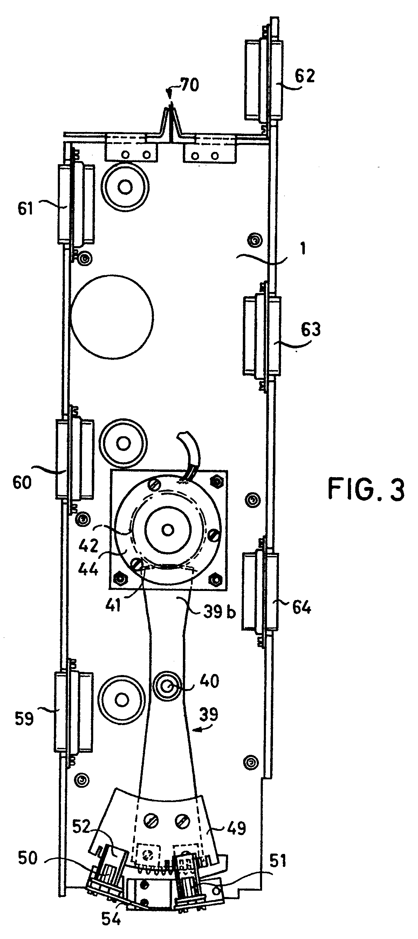

Fig. 3  eine Ansicht von unten gegen das Sortiermodul.

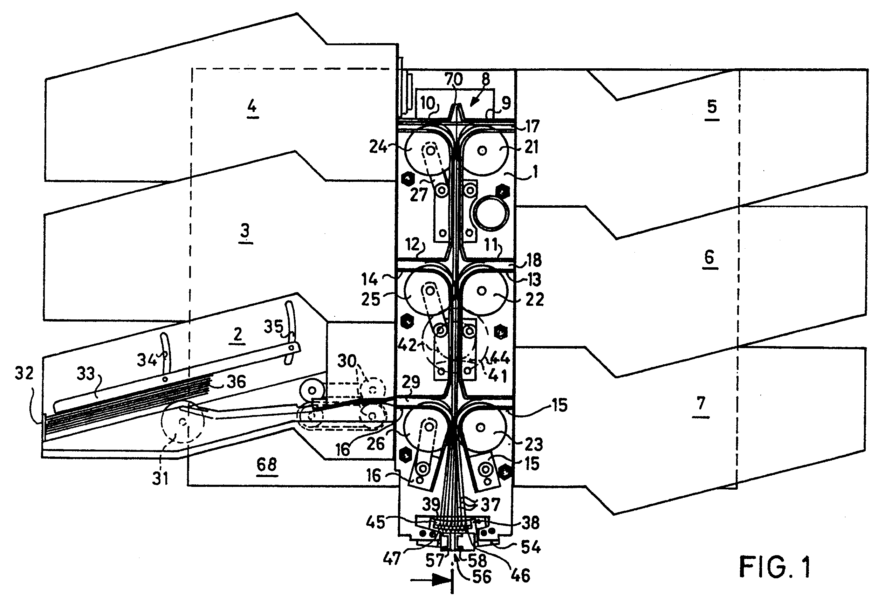

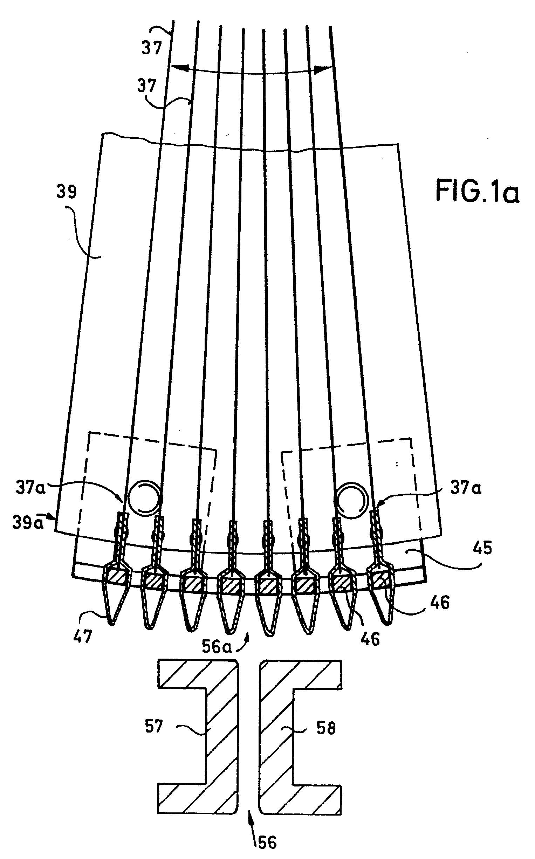

Fig. 1 stellt eine Gesamtübersicht des Sortiermodules dar, wobei die obere Gehäuseabdeckung für das Sortiermodul abgenommen ist. Auf einem Unterbau 1, der gleichzeitig als Begrenzungsfläche für die hochkantstehend transportierten Belege dient, sind Ablagefächer 2,3,4,5,6 und 7 angeordnet, von denen nur in dem Belegablagefach 2 Einzelheiten zu erkennen sind. Hierauf soll später eingegangen werden. Die Belegablagefächer 2 bis 7 sind beidseits einer Belegführungsbahn 8 angeordnet, die durch Führungswände 9,10,11,12,13,14,15 und 16 begrenzt wird. Die Führungswände 9 und 11 bilden zusammen eine Austrittsöffnung 17 für die Belege in das Belegablagefach 5, die Führungswände 11, 13 eine Austrittsöffnung 18 für die Belege in das Ablagefach 6 usw.

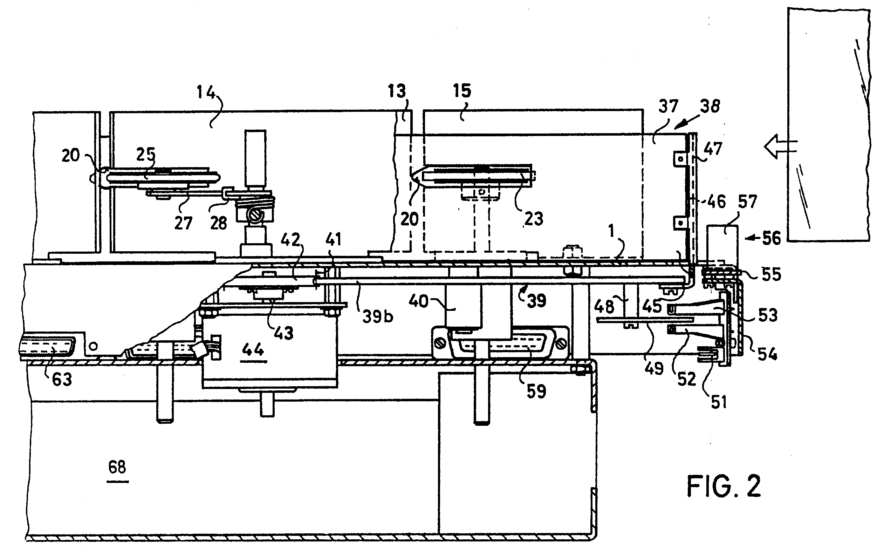

Die Führungswände 11 bis 16 sind mit Ausnehmungen 20 (vgl. Fig.2) versehen, durch die Belegantriebsrollen 21, 22 und 23 in die Belegführungsbahn 8 eintreten. Die Belegantriebsrollen 21 und 23 arbeiten für den Belegtransport mit Belegandrückrollen 24,25 und 26 zusammen, für die ebenfalls Ausnehmungen 20 in den entsprechenden Führungswänden 11 bis 16 vorgesehen sind. Die Belegandrückrollen 24 bis 26 sind auf Schwenkhebeln 27 (Fig. 2) gelagert und werden durch Federn 28 in Anlage an den Belegantriebsrollen 21 bis 23 gehalten. Durch einen gemeinsamen, nicht gezeichneten Antriebsmotor werden alle Belegantriebsrollen 21 bis 23 gleichlaufend angetrieben. Durch die Anordnung der Belegantriebsrollen in den Ausnehmungen 20 der Führungswände 11 bis 16 derart, daß sie nicht nur in der Belegführungsbahn 8, sondern auch in der Nähe der Austrittsöffnungen 17 und 18 wirksam werden, wirken die Belegantriebsrollen auch in der Nähe der Austrittsöffnungen 17 und 18 auf die Belege antreibend ein.

Zwischen den Führungswänden 14 und 16 ist die Austrittsöffnung 29 für das Ablagefach 2. Die Belege, die durch die Austrittsöffnung 29 das Sortiermodul verlassen, werden von Antriebs- und Andrückrollenpaaren 30 erfaßt und in das Ablagefach 2 transportiert. Hier werden sie durch eine Antriebsrolle 31 gegen einen Anschlag 32 gedrückt, wobei die Andrückplatte 33, die in Schlitzen 34 und 34 geführt ist, federnd an den Belegen 36 zur Anlage kommt.

In der Belegführungsbahn 8, zwischen den Führungswänden 9 bis 16, befinden sich lose eingelegt flexible Führungsschienen 37, die an ihren Einlaufenden 37a zu einem Bündel 38 zusammengefaßt sind. Jede der Führungsschienen 37 endet in einem der Ablagefächer 2 bis 7, so daß die Belege 36 jeweils entweder zwischen je zwei Führungsschienen 37 oder zwischen einer Führungsschiene 37 und den Führungswänden 9 bis 16 in das entsprechende Ablagefach transportiert wird. Man erkennt in der Nähe der Auslauföffnungen 17,18,29 jeweils die Enden je einer Führungsschiene 37. Eine weitere Führungsschiene 37 führt zur Austrittsöffnung 70, so daß zwischen den mittleren Führungsschienen der Beleg 36 auch das Sortiermodul durchlaufen kann in ein weiteres, hinten angeschlossenes (nicht gezeichnetes) Sortiermodul.

Bei den Führungsschienen 37 handelt es sich a flexible Blechstreifen, die teilweise mit Ausnehmungen 20 (Fig. 2) versehen sind, wie oben bereits erläutert, um den Durchtritt der Belegantriebs- und Belegandrückrollen 21 bis 26 zu ermöglichen. Unter dem Unterbau 1 (vgl. Fig. 2) ist ein Tragteil 39 angeordnet, welches auf einer Achse 40 schwenkbar gelagert ist. An seinem linken Ende 39b ist das Tragteil 39 mit einem Zahnsegment 41 versehen und wirkt mit einem Zahnrad 42 zusammen. Das Zahnrad 42 wird über eine Welle 43 von einem Schrittmotor 44 angetrieben. Der Schrittmotor 44 ist an dem Unterbau 1 befestigt. Mit dem Tragteil 39 verbunden ist ein kammartiges Teil 45, welches Vorsprünge 46 besitzt, die den einzelnen Führungsschienen 37 zugordnet sind. Die Verbindung zwischen je einer Führungsschiene 37 und dem entsprechenden kammartigen Vorsprung 46 des Teiles 45 wird hergestellt über ein Y-förmig gebogenes Blech als Führungsstück 47, welches jeden Vorsprung 46 mit je einer Führungsschiene 37 verbindet. Die Außenflächen der V-förmigen Führungsstücke 47 dienen als Einlauftrichter zwischen den jeweils zugeordneten beiden Führungsschienen 37.

Die Verhältnisse im Bereich der Einlauföffnung 56 sind in Fig. 1 größer dargestellt. Am einlaufseitigen Ende 39a des Tragteils 39 ist das kammartige Teil 45 mit den Vorsprüngen 46 befestigt. Die Führungsstücke 47 bilden paarweise einen Einlaufschlitz 56a, der breiter ist als die relativ schmale Einlauföffnung 56. Jede Führungsschiene 37 ist z.B. am Einlaufende 37a an zwei Stellen (Fig.2) mit einem zugehörigen Führungsstück 47 verbunden.

Mit dem Tragteil 39 ist über einen Abstandsbolzen 48 ein Stellungsgeber 49 verbunden, der als Schlitzscheibe ausgebildet ist. Dieser Stellungsgeber 49 arbeitet mit Sensoren 50 und 51 zusammen, um die jeweilige Stellung des Stellungsgebers 49 und damit auch des Tragteiles 39 und des Führungsschienenbündels 38 der Steuerung anzugeben, um von der Steuerung die entsprechenden Schrittimpulse für den Schrittmotor 44 abzuleiten. Die Sensoren 50 und 51, die jeweils aus einem Geber 52 und aus einem Empfänger 53 bestehen, sind an einem Tragteil 54 befestigt, welches seinerseits am Unterbau 1 befestigt ist. Ebenfalls an dem Tragteil 54 befestigt ist eine kleine Schaltungsplatte 55, die zwei die Einlauföffnung 56 begrenzende Führungsstücke 57 und 58 trägt, wobei die Führungsstücke 57 und 58 ebenfalls einen elektrischen Belegfühler tragen, der der Steuerung angibt, ob sich ein Beleg 36 dazwischen befindet oder nicht. Die Steuerung befindet sich auf einer elektrischen Schaltungsplatte, die in einem Gehäuse 68 unterhalb des Unterbaues 1 angeordnet ist.

Da, wie bereits erwähnt, die einzelnen Ablagebehälter 2 bis 7 je mit einem eigenen Antriebsmittel ausgerüstet sind, ist es möglich, sie lediglich über eine Steckverbindung 59,60,61,62,63 und 64 mit dem Sortiermodul zu verbinden. Dabei stützen sich die Ablagefächer 2 bis 7 jeweils auf da Unterbau 1 ab.

Es wird nunmehr auf die Funktionsweise des Sortiermoduls eingegangen, soweit diese sich nicht schon aus der vorhergehenden Beschreibung ergibt. Die Belege 36 kommen aus einem Beleg-Codiergerät und laufen durch die Einlauföffnung 56 zwischen den beiden Führungsteilen 57 und 58 hindurch. Vorher wurde bereits die Art des Beleges 36 abgetastet und an die Steuerung gemeldet. Die Steuerung hat über den Schrittmotor 44 das Bündel 38 der Führungsschienen 37 bereits so eingestellt, daß der trichterförmige Einlaufschlitz 56a zwischen jeweils zwei V-förmigen Führungsstücken 47 so eingestellt ist, daß sie vor der Einlauföffnung 56 steht.

Dementsprechend läuft der Beleg 36 an der richtigen Stelle in das Führungsschienenbündel 38 ein und wird in den durch den Beleg 36 vorgegebenen Führungskanal gebracht und in dem entsprechenden Belegablagefach 2 bis 7 abgelegt, wobei er einerseits durch die Führungswände 9 bis 16 und andererseits durch die Führungsschienen 37 geführt wird. Handelt es sich dabei um einen Beleg, der in keines der Belegablagefächer 2 bis 7 gehört, wohl aber in ein zweites Sortiermodul, welches hinten an das dargestellte Sortiermodul angeschlossen ist, dann wird der Beleg durch die Austrittsöffnung 70 ausgegeben und in die Eingangsöffnung des nächsten Sortiermoduls eingeführt. Während des Belegtransportes wird dieser durch die Belegantriebsrollen 21 bis 23 und die damit zusammenwirkenden Belegandrückrollen 24 bis 26 angetrieben.

**Patentansprüche**

1. Sortiermodul für die Belegsortierung, bei dem die hochkantstehend transportierten Belege von einer Einlauföffnung zwischen Sortierkanäle bildenden flexiblen Führungsschienen (37) zu den einzelnen Ablagefächern (2 bis 7) führbar sind, wobei jeweils zwei flexible Führungsschienen (37) einen trichterförmigen Einlauf bilden und ein Einlauftrichter durch eine Steuerung für jeweils einen Sortierkanal auswählbar ist,
dadurch gekennzeichnet,
daß die flexiblen Führungsschienen (37) auf einem gemeinsamen Tragteil (39) angeordnet sind und an ihren Einlaufenden (37a) jeweils trichterförmige Einlaufschlitze (56a) bilden, die einer schmaleren, ortsfesten Einlauföffnung (56) gegenüberstehen und daß das Tragteil (39) durch eine Steuerung und einen Schrittmotor (44) derart einstellbar ist, daß der angesteuerte trichterförmige Einlaufschlitz (56a) der Einlauföffnung (56) gegenübersteht, daß das Tragteil (39) an seinem einlaufseitigen Ende (39a) kamartige Vorsprünge (46) aufweist, die den einzelnen Führungsschienen (37) zugeordnet sind, daß über V-förmig gebogene Führungsstücke (47) eine Verbindung zwischen den Führungsschienen (37) und den Vorsprüngen (46) gebildet ist und daß die Außenflächen der V-förmigen Führungsstücke (47) zusammen mit den benachbarten V-förmigen Führungsstücken (47) der anderen Führungsschienen (37) jeweils den trichterförmigen Einlaufschlitz (56a) bilden.

2. Sortiermodul nach Anspruch 1,
dadurch gekennzeichnet,
daß die Einlauföffnung (56) von zwei parallelen Führungsstücken (57,58) begrenzt wird, die zur Kontrolle des Beleglaufes einen elektrischen Belegfühler tragen.

3. Sortiermodul nach Anspruch 1,
dadurch gekennzeichnet,
daß das Tragteil (39) an seinem dem einlaufseitigen Ende (39a) abgewandten Ende (39b) mit einem Zahnsegment (41) versehen ist, das mit einem von dem Schrittmotor (44) angetriebenen Zahnrad (42) in Eingriff steht.

4. Sortiermodul nach Anspruch 1,
dadurch gekennzeichnet,
daß mit dem Tragteil (39) als Stellungsgeber eine Schlitzscheibe (49) verbunden ist, die mit entsprechenden Sensoren (50,51) zusammenarbeitet, die über die Steuerung die Einstellung des Tragteiles (39) und der Führungsschienen (37) in die anzuwählende Position bewirken.

5. Sortiermodul nach Anspruch 1,
dadurch gekennzeichnet,
daß die flexiblen Führungsschienen (37) lose zwischen den äußeren, die Führungsbahn begrenzenden Führungswänden (9 bis 16) liegen, die gleichzeitig jeweils Auslauföffnungen (17,18,29) für die einzelnen Ablagefächer (2 bis 7) bilden.

6. Sortiermodul nach Anspruch 5,
dadurch gekennzeichnet,
daß die flexiblen Führungsschienen (37) und die Führungswände (9 bis 16) mit Ausnehmungen (20) für den Durchtritt von Belegantriebs- und Belegandrückrollen (21 bis 26) versehen sind.

7. Sortiermodul nach Anspruch 5,
dadurch gekennzeichnet,
daß elne mittlere Führungsschiene (37) die Belege (36) zu einer Austrittsöffnung (70) führt, wobei an dieser Austrittsöffnung (70) ein weiteres Sortiermodul anschließbar ist, derart, daß die Austrittsöffnung (70) ausgerichtet ist mit der Einlauföffnung für das nächste Sortiermodul.

8. Sortiermodul nach Anspruch 1,
dadurch gekennzeichnet,

daß die Ablagefächer (2 bis 7) lediglich jeweils über Steckverbindungen (59 bis 64) an das Sortiermodul angeschlossen sind.

## Claims

1. Sorting module for document sorting, in which the documents, which are transported standing upright, may be guided from an inlet opening between flexible guide rails (37), forming sorting channels, to the individual stackers (2 to 7), in each case two flexible guide rails (37) forming a funnel-shaped inlet and an inlet funnel being selectable by means of a control for a respective sorting channel, characterized in that the flexible guide rails (37) are arranged on a common bearer part (39) and form at their inlet ends (37a) in each case funnel-shaped inlet slots (56a) which are opposite a narrower fixed inlet opening (56), and in that the bearer part (39) is adjustable by a control and a stepping motor (44) such that the controlled funnel-shaped inlet slot (56a) is opposite the inlet opening (56), in that the bearer part (39) has at its inlet-side end (39a) comb-like projections (46) which are associated with the individual guide rails (37), in that a connection is formed by way of guide pieces (47) bent in a V shape between the guide rails (37) and the projections (46), and in that the outer surfaces of the V-shaped guide pieces (47) together with the adjacent V-shaped guide pieces (47) of the other guide rails (37) form the respective funnel-shaped inlet slot (56a).

2. Sorting module according to Claim 1, characterized in that the inlet opening (56) is delimited by two parallel guide pieces (57, 58) which carry an electrical document sensor for checking the flow of the documents.

3. Sorting module according to Claim 1, characterized in that the bearer part (39) is provided at its end (39b) remote from the inlet-side end (39a) with a toothed segment (41) which is in engagement with a toothed wheel (42) driven by the stepping motor (44).

4. Sorting module according to Claim 1, characterized in that there is connected to the bearer part (39) as a position generator a slotted plate (49) which cooperates with corresponding sensors (50, 51) which, by way of the control, bring about the adjustment of the bearer part (39) and of the guide rails (37) into the position to be selected.

5. Sorting module according to Claim 1, characterized in that the flexible guide rails (37) lie loosely between the outer guide walls (9 to 16) which delimit the guide path and at the same time form respective outlet openings (17, 18, 29) for the individual stackers (2 to 7).

6. Sorting module according to Claim 5, characterized in that the flexible guide rails (37) and the guide walls (9 to 16) are provided with cutouts (20) for document drive and document contact rollers (21 to 26) to pass through.

7. Sorting module according to Claim 5, characterized in that a middle guide rail (37) guides the documents (36) to an outlet opening (70), it being possible to connect a further sorting module to this outlet opening (70) such that the outlet opening (70) is aligned with the inlet opening for the next sorting module.

8. Sorting module according to Claim 1, characterized in that the stackers (2 to 7) are connected to the sorting module in each case only by way of plug-in connectors (59 to 64).

**Revendications**

1. Module de tri pour trier des documents dans lequel lesdits documents transportés sur chant peuvent être amenés d'une ouverture d'entrée; entre des glissières de guidage flexibles (37) formant des canaux de tri; aux différents casiers de réception (2 à 7); deux glissières de guidage flexibles (37) formant respectivement une entrée en forme d'entonnoir et une trémie d'entrée pouvant être sélectionnée par une commande pour respectivement un canal de tri, caractérisé par le fait que les glissières de guidage flexibles (37) sont disposées sur un élément porteur (39) commun et forment à leurs extrémités d'entrée (37a) respectivement des fentes d'entrée (56a) en forme d'entonnoir qui sont placées en face d'une ouverture d'entrée stationnaire (56) plus étroite et que l'élément porteur (39) peut être orienté par une commande et un moteur pas à pas (44) de telle sorte que la fente d'entrée (56a) en forme d'entonnoir attaquée soit disposée en face de l'ouverture d'entrée (56). que l'élément porteur (39) présente à son extrémité du côté entrée (39a) des saillies (46) en forme de peigne qui sont associées aux différentes glissières de guidage (37), que, par l'intermédiaire d'éléments de guidage (47) cintrés en forme de V, une liaison est réalisée entre lesdites glissières de guidage (37) et lesdites saillies (46) et que les surfaces extérieures des éléments de guidage (47) en forme de V forment, conjointement avec les éléments de guidage (47) en forme de V voisines des autres glissières de guidage (37), respectivement la fente d'entrée (56a) en forme d'entonnoir.

2. Module de tri salon la revendication 1, caractérisé par le fait que l'ouverture d'entrée (56) est limitée par deux éléments de guidage parallèles (57, 58) qui portent, pour la contrôle de l'acheminement du document, un palpeur de documents électrique.

3. Module de tri selon la revendication 1, caractérisé par le fait que l'élément porteur (39) est équipé, à son extrémité (39 b) tournant le dos à l'extrémité du côté entrée (39a), d'un segment denté (41) qui engrène avec une roue dentée (42) entraînée par le moteur pas à pas (44).

4. Module de tri selon la revendication 1, caractérisé par le fait que, à l'élémént porteur (39), est relié, comme transmetteur de position, un disque à fentes (49) qui coopère avec les senseurs (50, 51) correspondants qui réalisent, par l'intermédiaire de la commande, le déplacement de l'élément porteur (39) et des glissières de guidage (37) dans la position a sélectionner.

5. Module de tri selon la revendication 1, caractérisé par la fait que les glissières de guidage flexibles (39) sont posées non attachées entre las parois de guidage (9 à 16) extérieures qui limitant la piste de guidage et qui formant simultanément les ouvertures de sortie (17, 18, 19) respectives pour les différents casiers de réception (2 à 7).

6. Module de tri selon la revendication 5, caractérisé par le fait que las glissières de guidage flexibles (37) et las parois de guidage (9 à 16) sont pourvues d'évidements (20) pour le passage de rouleaux d'entraînement de documents et presseurs de documents (21 à 26)

7. Module de tri selon la revendication 5, caractérisé par le fait qu'une glissière de guidage médiane (37) achemine les documents (36) à une ouverture de sortie (70), un autre module de tri pouvant être raccordé a ladite ouverture de sortie (70), de telle sorte que cette ouverture de sortie (70) soit alignée avec l'ouverture d'entrée pour la module de tri suivant.

8. Module de tri selon la revendication 1, caractérisé par le fait que les casiers de réception (2 à 7) sont seulement raccordés, chacun pour soi, au module de tri par l'intermédiaire de connexions enfichables (59 à 64).

FIG. 1

FIG.1a

FIG. 2

EP 0 171 712 B1

FIG. 3